# EUROPEAN PATENT APPLICATION

(11) **EP 4 776 150 A1**
(43) Date of publication of application: **15.07.2026**
(21) Application number: 25196549.7
(22) Date of filing: 18.08.2025
(51) Int. Cl.: G06F 16/27, G06F 16/23

(54) **DATA PROCESSING METHOD AND APPARATUS BASED ON KEY-VALUE DATABASE, DEVICE, STORAGE MEDIUM, AND KEY-VALUE DATABASE SYSTEM**

(30) Priority: 09.01.2025 CN 202510038702
(71) Applicant: Beijing Volcano Engine Technology Co., Ltd., Beijing 100190 (CN)
(72) Inventor: PI, Zhenwei, Beijing, 100028 (CN); ZHANG, Rui, Beijing, 100028 (CN); LU, Changqi, Beijing, 100028 (CN); ZHOU, Enhua, Beijing, 100028 (CN); WANG, Yu, Beijing, 100028 (CN); YANG, Sijia, Beijing, 100028 (CN)
(74) Representative: Marks & Clerk LLP

(57) **Abstract**

Embodiments of the present disclosure relate to a data processing method and apparatus based on a key-value database, a device, a storage medium, and a key-value database system. The method includes: sending, upon determining that there is key-value data to be cached in a graphics memory of a graphics processing unit, a data storage request for the key-value data to be cached to a key-value database server, where the data storage request carries storage address information and storage length information of value data of the key-value data to be cached in the graphics memory; and receiving a data read request that is sent by the key-value database server, the data read request carrying the storage address information, and controlling a first network interface card supporting a remote direct memory access protocol to read, from the graphics memory, the value data of the key-value data to be cached according to the storage address information and send the value data of the key-value data to be cached to the key-value database server for writing via a second network interface card supporting the remote direct memory access protocol. According to the embodiments of the present disclosure, the key-value data in the graphics memory of a GPU may be stored without a memory copying process, and the processing efficiency of the key-value data is improved.

## Description

### TECHNICAL FIELD

The present disclosure relates to the field of data processing technologies, and in particular, to a data processing method and apparatus based on a key-value database, a device, a storage medium, and a key-value database system.

### BACKGROUND

A KV cache (Key-Value Cache) is a technology used in a natural language processing model to optimize the performance of a self-attention mechanism, and is commonly used in inference tasks such as text generation. The self-attention mechanism calculates a corresponding key (Key) and a corresponding value (Value) for each input token (token), and caches the key and the value calculated in this round in a graphics processing unit (GPU) so that when a new token is subsequently generated, the previously calculated key and value may be directly read from the KV cache and used to generate new key-value data, without recalculating the previous key-value data, thereby improving the efficiency and performance of the model inference.

Since the storage space of the GPU memory is limited and the cost is high, if the key-value data is cached in the GPU memory every time the key-value data is generated, the cost of the GPU will increase. Therefore, in order to reduce the cost, in the related art, a distributed KV storage component is usually used to store the key-value data. Specifically, the key-value data is first copied from the GPU memory to the host memory, and then the key-value data is taken out of the host memory and sent to the distributed KV storage space via the network, thereby completing the storage of the key-value data.

Apparently, the above-mentioned processing method for distributed KV storage requires a process such as memory copying, resulting in a slow processing speed. Therefore, in a distributed KV storage scenario, how to implement a more efficient key-value data processing method is an urgent technical issue that needs to be solved.

### SUMMARY

In order to solve the above technical problems or at least partially solve the above technical problems, the present disclosure provides a data processing method and apparatus based on a key-value database, a device, a storage medium, and a key-value database system.

In a first aspect, an embodiment of the present disclosure provides a data processing method based on a key-value database, where the method includes: sending, upon determining that there is key-value data to be cached (e.g. first key-value data) in a graphics memory of a graphics processing unit, a data storage request for the key-value data to be cached to a key-value database server, where the data storage request carries key data of the key-value data to be cached and storage region information of value data of the key-value data to be cached, and the storage region information includes storage address information and storage length information of the value data of the key-value data to be cached in the graphics memory of the graphics processing unit; and receiving a data read request that is returned via a second network interface card by the key-value database server in response to the data storage request , the data read request carrying the storage address information, and controlling a first network interface card to read, from the graphics memory of the graphics processing unit, the value data of the key-value data to be cached according to the storage address information and send the value data of the key-value data to be cached to the key-value database server for writing via the second network interface card, where the first network interface card and the second network interface card communicate via a Remote Direct Memory Access protocol.

In an optional implementation, the method further includes: sending, upon determining that there is key-value data to be obtained (e.g. second key-value data) in the graphics processing unit, a data obtaining request to the key-value database server, where the data obtaining request carries key data of the key-value data to be obtained and information about a second target storage region (e.g. second storage region) in the graphics memory of the graphics processing unit, and the data obtaining request is used to request the key-value database server to obtain value data of the key-value data to be obtained according to the key data; and receiving the value data of the key-value data to be obtained returned by the key-value database server, and controlling the first network interface card to write the value data of the key-value data to be obtained into the second target storage region.

In an optional implementation, before the controlling the first network interface card to read, from the graphics processing unit, the value data of the key-value data to be cached according to the storage address information, the method further includes: registering, in the first network interface card, part or all of a storage region in the graphics memory of the graphics processing unit, so that the first network interface card is authorized to access the part or all of the storage region.

In an optional implementation, the sending, to a key-value database server, a data storage request upon determining that there is key-value data to be cached in a graphics memory of a graphics processing unit includes: sending, upon determining that there is key-value data to be cached in the graphics memory of the graphics processing unit, to the key-value database server via the first network interface card, the data storage request by using a message sending operation in the Remote Direct Memory Access protocol, so that the second network interface card receives the data storage request by using a message receiving operation in the Remote Direct Memory Access protocol.

In an optional implementation, the receiving a data read request that is returned via a second network interface card by the key-value database server in response to the data storage request , the data read request carrying the storage address information includes: receiving the data read request sent by the key-value database server via the second network interface card by using a read operation in the Remote Direct Memory Access protocol, so that the second network interface card writes the read value data of the key-value data to be cached by using a write operation in the Remote Direct Memory Access protocol.

In a second aspect, an embodiment of the present disclosure provides a data processing method based on a key-value database, where the method is applied to a key-value database server and includes: receiving a data storage request from a key-value database client, where the data storage request carries key data of key-value data to be cached and storage region information of value data of the key-value data to be cached, and the storage region information includes storage address information and storage length information of the value data of the key-value data to be cached in a graphics memory of a graphics processing unit; determining a first target storage region corresponding to the value data of the key-value data to be cached according to the storage length information; sending, in response to the data storage request, a data read request that carries the storage address information to the key-value database client via a second network interface card, where the data read request is used to trigger the key-value database client to control a first network interface card to read, from the graphics processing unit, the value data of the key-value data to be cached according to the storage address information, the first network interface card and the second network interface card communicating via a Remote Direct Memory Access protocol; and writing, upon the value data of the key-value data to be cached is received, the value data of the key-value data to be cached into the first target storage region via the second network interface card.

In an optional implementation, the writing, into the first target storage region, the value data of the key-value data to be cached after value data of the key-value data to be cached is received includes: upon the value data of the key-value data to be cached is received, writing, into the first target storage region via the second network interface card, the value data of the key-value data to be cached, where the second network interface card supports the Remote Direct Memory Access protocol.

In an optional implementation, the method further includes: obtaining a virtual memory space of a preset memory size (e.g. a first memory), and registering the virtual memory space in the second network interface card, where the virtual memory space of the preset memory size is a size of a preset integer number of memory blocks.

In an optional implementation, the determining a first target storage region corresponding to the value data of the key-value data to be cached according to the storage length information includes: determining a target number (e.g. a number) of memory blocks from the virtual memory space according to the storage length information, where a memory size corresponding to the target number of memory blocks is not less than a memory size corresponding to the storage length information; and determining the target number of memory blocks as the first target storage region corresponding to the value data of the key-value data to be cached.

In an optional implementation, the method further includes: receiving a data obtaining request from the key-value database client, where the data obtaining request carries key data of key-value data to be obtained and information about a second target storage region in the graphics memory of the graphics processing unit; and obtaining value data of the key-value data to be obtained according to the key data of the key-value data to be obtained, and controlling a second network interface card to write the value data of the key-value data to be obtained into the second target storage region of the key-value database client.

In a third aspect, an embodiment of the present disclosure provides a key-value database system, where the key-value database system includes a key-value database client and a key-value database server; the key-value database client is configured to: send, upon determining that there is key-value data to be cached in a graphics memory of a graphics processing unit, to the key-value database server, a data storage request for the key-value data to be cached, where the data storage request carries key data of the key-value data to be cached and storage region information of value data of the key-value data to be cached, and the storage region information includes storage address location information and storage length information of the value data of the key-value data to be cached in the graphics memory of the graphics processing unit; the key-value database server is configured to: determine, upon the data storage request is received, a first target storage region corresponding to the value data of the key-value data to be cached according to the storage length information, and send a data read request that carries the storage address information to the key-value database client,; the key-value database client is further configured to: control, upon receiving the data read request that is sent by the key-value database server via a second network interface card, a first network interface card to read, from the graphics memory of the graphics processing unit, the value data of the key-value data to be cached according to the storage address information, the data read request carrying the storage address information, and send the value data of the key-value data to be cached to the key-value database server, where the first network interface card and the second network interface card communicate via a Remote Direct Memory Access protocol; and the key-value database server is further configured to: write, upon the value data of the key-value data to be cached is received, via the second network interface card, the value data of the key-value data to be cached into the first target storage region.

In a fourth aspect, the present disclosure provides a data processing apparatus based on a key-value database, where the apparatus includes: a first sending module, configured to send, upon determining that there is key-value data to be cached in a graphics memory of a graphics processing unit, a data storage request for the key-value data to be cached to a key-value database server, where the data storage request carries key data of the key-value data to be cached and storage region information of value data of the key-value data to be cached, and the storage region information includes storage address information and storage length information of the value data of the key-value data to be cached in the graphics memory of the graphics processing unit; and a reading module, configured to receive a data read request that is returned via a second network interface card by the key-value database server in response to the data storage request , the data read request carrying the storage address information, and control a first network interface card to read, from the graphics memory of the graphics processing unit, the value data of the key-value data to be cached according to the storage address information and send the value data of the key-value data to be cached to the key-value database server for writing via the second network interface card, where the first network interface card and the second network interface card communicate via a Remote Direct Memory Access protocol.

In a fifth aspect, the present disclosure provides a data processing apparatus based on a key-value database, where the apparatus is applied to a key-value database server and includes: a first receiving module, configured to receive a data storage request from a key-value database client, where the data storage request carries key data of key-value data to be cached and storage region information of value data of the key-value data to be cached, and the storage region information includes storage address information and storage length information of the value data of the key-value data to be cached in a graphics memory of a graphics processing unit; a determination module, configured to determine a first target storage region corresponding to the value data of the key-value data to be cached according to the storage length information; a third sending module, configured to send, in response to the data storage request, a data read request that carries the storage address information to the key-value database client via a second network interface card, where the data read request is used to trigger the key-value database client to control a first network interface card to read, from the graphics processing unit, value data of the key-value data to be cached according to the storage address information, and the first network interface card and the second network interface card communicate via a Remote Direct Memory Access protocol; and a writing module, configured to write, upon the value data of the key-value data to be cached is received, the value data of the key-value data to be cached into the first target storage region.

In a sixth aspect, an embodiment of the present disclosure further provides an electronic device, where the electronic device includes: a processor; and a memory configured to store instructions that may be executed by the processor, where the processor is configured to read the instructions from the memory, and execute the instructions to implement the data processing method based on a key-value database according to the embodiment of the present disclosure.

In a seventh aspect, an embodiment of the present disclosure further provides a computer-readable storage medium, where the storage medium stores a computer program, and the computer program is used to cause a processor to perform the data processing method based on a key-value database according to the embodiment of the present disclosure.

In an eighth aspect, the present disclosure provides a computer program product, where the computer program product includes a computer program/instruction, and when the computer program/instruction is executed by a processor, cause a processor to perform the foregoing method.

Compared with the prior art, the technical solutions provided by the embodiments of the present disclosure have the following advantages.

In the data processing method based on a key-value database provided by this embodiment of the present disclosure, upon determining that there is key-value data to be cached in a graphics memory of a graphics processing unit, a data storage request for the key-value data to be cached is sent to a key-value database server, where the data storage request carries storage address information and storage length information of value data of the key-value data to be cached in the graphics memory of the graphics processing unit; and a data read request, carrying the storage address information, that is returned by the key-value database server for the data storage request via a second network interface card is received, and a first network interface card is controlled to read, from the graphics memory of the graphics processing unit, the value data of the key-value data to be cached according to the storage address information and send the value data of the key-value data to be cached to the key-value database server for writing via the second network interface card, where the first network interface card and the second network interface card communicate via a remote direct memory access protocol.

In this embodiment of the present disclosure, key data and the value data in the key-value data to be cached in a GPU memory are independently transmitted to the key-value database server respectively, and the first network interface card supporting the remote direct memory access protocol is controlled to directly write the value data with a relatively large data volume from the GPU memory into a first target storage region of the key-value database server, so that the key-value data to be cached is stored by the key-value database server via the second network interface card supporting the remote direct memory access protocol. It may be seen that in the data processing method based on a key-value database provided by this embodiment of the present disclosure, the key-value data in the GPU memory may be stored without a process such as memory copying, and the processing efficiency of the key-value data is improved.

### BRIEF DESCRIPTION OF DRAWINGS

The foregoing and other features, advantages, and aspects of the embodiments of the present disclosure become more apparent with reference to the following specific implementations and in conjunction with the drawings. Throughout the drawings, the same or similar reference numerals denote the same or similar elements. It should be understood that the drawings are schematic and that parts and elements are not necessarily drawn to scale.
Fig. 1 is a schematic diagram of a structure of a database system according to an embodiment of the present disclosure;
Fig. 2 is a flowchart of storage of a database system according to an embodiment of the present disclosure;
Fig. 3 is a schematic flowchart of a data processing method based on a key-value database according to an embodiment of the present disclosure;
Fig. 4 is a schematic flowchart of another data processing method based on a key-value database according to an embodiment of the present disclosure;
Fig. 5 is a schematic diagram of a structure of a data processing apparatus based on a key-value database according to an embodiment of the present disclosure;
Fig. 6 is a schematic diagram of a structure of another data processing apparatus based on a key-value database according to an embodiment of the present disclosure; and
Fig. 7 is a schematic diagram of a structure of a data processing device based on a key-value database according to an embodiment of the present disclosure.

### DETAILED DESCRIPTION

The embodiments of the present disclosure are described in more detail below with reference to the drawings. Although some embodiments of the present disclosure are shown in the drawings, it should be understood that the present disclosure may be implemented in various forms and should not be construed as being limited to the embodiments set forth herein. Instead, these embodiments are provided for more thorough and complete understanding of the present disclosure. It should be understood that the drawings and embodiments of the present disclosure are only for illustrative purposes and are not intended to limit the protection scope of the present disclosure.

It should be understood that steps described in method implementations of the present disclosure may be performed in different orders and/or in parallel. In addition, the method implementations may include additional steps and/or omit the steps shown. The scope of the present disclosure is not limited in this respect.

As used herein, the term "include/comprise" and its variations are open-ended inclusions, that is, "include/comprise but not limited to". The term "based on" is "at least partially based on". The term "one embodiment" means "at least one embodiment"; the term "another embodiment" means "at least one other embodiment"; and the term "some embodiments" means "at least some embodiments". Related definitions of other terms are given in the description below.

It should be noted that concepts such as "first" and "second" mentioned in the present disclosure are only used to distinguish different apparatuses, modules, or units, and are not used to limit an order or interdependence of functions performed by these apparatuses, modules, or units.

It should be noted that modifications of "one" and "multiple" mentioned in the present disclosure are exemplary rather than restrictive. Those skilled in the art should understand that unless otherwise explicitly specified in the context, the modifications should be understood as "one or multiple".

Names of messages or information exchanged between multiple apparatuses in the implementations of the present disclosure are only for illustrative purposes, and are not intended to limit the scope of these messages or information.

A Transformer model is a deep learning model architecture used for natural language processing and sequence data processing. A self-attention mechanism is a core mechanism of the Transformer model, and uses a key and a value to calculate an attention score. Each input token generates a key and a value, which are used to determine a degree of attention to other input tokens.

A graphics processing unit (Graphics Processing Unit, GPU) is an electronic computing device used to process graphics and video rendering tasks. The GPU has a highly parallel architecture and is capable of processing a large amount of graphics data simultaneously, thereby improving the speed and efficiency of graphics processing.

A KV cache (Key-Value Cache) is a technology used in a Transformer model to optimize the performance of a self-attention mechanism, and is commonly used in inference tasks such as text generation. The self-attention mechanism calculates a corresponding key (Key) and a corresponding value (Value) for each input token (token), and caches the key and the value calculated in this round in the GPU so that when a new token is subsequently generated, the previously calculated key and value may be directly read from the KV cache and used to generate new key-value data, without recalculating the previous key-value data, thereby improving the efficiency and performance of the model inference.

Since the storage space of the GPU memory is limited and the cost is high, caching key-value data in the GPU memory will increase the cost of the GPU. Therefore, in order to reduce the cost, in the prior art, a distributed KV storage component is usually used to store the key-value data. For example, in an application scenario of text generation, the GPU may swap out an inactive KV cache from the GPU memory to the distributed KV storage space, and load the KV cache from the distributed KV storage space into the GPU memory again in a next message chat, thereby improving the concurrency of the GPU in processing the context and reducing the cost.

For another example, in a scenario of model inference, the process may be divided into two stages: prefill and decode. Usually, GPUs with different performances are used to achieve the purpose of reducing costs. Specifically, upon completing prefill, GPU0 needs to pass a KV cache to GPU1 to continue decode. In a scenario where distributed KV storage is not used, GPU0 needs to wait for GPU1 to be idle and release memory space before sending the KV cache to the memory of GPU1 for processing. Apparently, in this processing manner, there may be a case where the GPU has to wait, which will affect the computing performance of the GPU. In a scenario of distributed KV storage, upon completing prefill, GPU0 immediately stores the generated KV cache into the distributed KV storage space, and continues to process other prefill requests, so that the computing performance of the GPU may be improved.

It may be seen that in the foregoing two KV data storage manners in the scenario of distributed KV storage, the key-value data is first copied from the GPU memory to the memory of the host, and then the KV data is taken out of the host memory and sent to a remote distributed KV storage space via the network, thereby completing the storage of the key-value data.

Apparently, the above-mentioned processing method for distributed KV storage requires a process such as memory copying, resulting in a slow processing speed. Therefore, in the scenario of distributed KV storage, how to implement a more efficient key-value data processing method is an urgent technical issue that needs to be solved.

To this end, an embodiment of the present disclosure provides a data processing method based on a key-value database. Specifically, upon determining that there is key-value data to be cached in a graphics memory of a graphics processing unit, a data storage request for the key-value data to be cached is sent to a key-value database server, where the data storage request carries storage address information and storage length information of value data of the key-value data to be cached in the graphics memory of the graphics processing unit; and a data read request, carrying the storage address information, that is sent by the key-value database server is received, and a first network interface card is controlled to read, from the graphics memory of the graphics processing unit, the value data of the key-value data to be cached according to the storage address information and send the value data of the key-value data to be cached to the key-value database server for writing via a second network interface card, where the first network interface card and the second network interface card both communicate via a remote direct memory access protocol.

In this embodiment of the present disclosure, the key data and the value data in the key-value data to be cached in the graphics memory of the GPU are independently transmitted to the key-value database server respectively, and the first network interface card supporting the remote direct memory access protocol is controlled to directly write the value data with a relatively large data volume from the GPU memory into the first target storage region of the key-value database server, so that the key-value data to be cached is stored by the key-value database server via the second network interface card supporting the remote direct memory access protocol. It may be seen that in the data processing method based on a key-value database provided by this embodiment of the present disclosure, the key-value data in the GPU memory may be stored without a process such as memory copying, and the processing efficiency of the key-value data is improved.

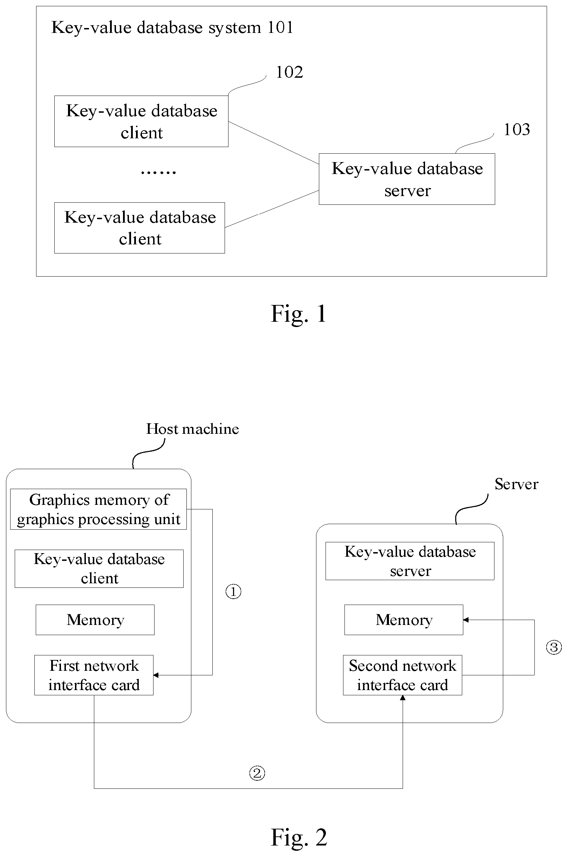

Based on this, an embodiment of the present disclosure provides a database system. Fig. 1 is a schematic diagram of a structure of a database system according to an embodiment of the present disclosure. The database system 101 includes multiple key-value database clients and one key-value database server. Specifically, a key-value database client 102 and a key-value database server 103 are used as an example for description.

The key-value database client 102 is configured to: send, upon determining that there is key-value data to be cached in a graphics memory of a graphics processing unit, to the key-value database server, a data storage request for the key-value data to be cached.

The data storage request carries key data of the key-value data to be cached and storage region information of value data of the key-value data to be cached, the storage region information including storage address location information and storage length information of the value data of the key-value data to be cached in the graphics memory of the graphics processing unit.

In this embodiment of the present disclosure, the graphics memory of the graphics processing unit refers to a memory in the graphics processing unit (GPU) that is dedicated to storing graphics data and other computational task data. For example, in an inference stage of the natural language processing model, the GPU memory may be used to store key-value data calculated by the self-attention mechanism. The key-value data is cached so that the key-value data may be directly obtained from the cache and used for calculation when a long sequence is subsequently processed, thereby reducing the computational overhead in the inference process.

In this embodiment of the present disclosure, the key-value data to be cached may include key-value data generated in a training stage or the inference stage of the model. The key-value data to be cached includes key data (Key) and value data (Value), where the key data may be used to uniquely identify the data to be cached, and the value data refers to specific data corresponding to the key data.

In this embodiment of the present disclosure, upon determining that there is key-value data to be cached in the graphics memory of the graphics processing unit (GPU), the key-value database client first sends, to the key-value database server, a data storage request for the key-value data to be cached. The data storage request is used to request the key-value database server to write the key-value data to be cached into the storage space of the key-value database server, to reduce the occupancy of the key-value data to be cached on the graphics memory of the GPU.

In this embodiment of the present disclosure, the data storage request carries the key data of the key-value data to be cached and the storage region information of the value data of the key-value data to be cached, where the storage region information includes the storage address information and the storage length information of the value data of the key-value data to be cached in the GPU memory, the storage address information includes the start address information of the value data of the data to be cached in the GPU memory, and the storage length information refers to the length or size of the key-value data to be cached in the GPU memory.

In this embodiment of the present disclosure, by carrying the key data of the key-value data to be cached in the data storage request, the security and correct access permission during the remote access and data storage process may be improved. In addition, the data storage request also carries the storage length information of the value data of the key-value data to be cached in the graphics memory of the GPU, so that the key-value database server may determine, based on the storage length information, the storage region of the key-value data to be cached in the key-value database server.

The key-value database server 103 is configured to: determine, upon the data storage request is received, a first target storage region corresponding to the value data of the key-value data to be cached according to the storage length information, and send a data read request that carries the storage address information to the key-value database client.

In this embodiment of the present disclosure, upon receiving the data storage request sent by the key-value database client, the key-value database server first parses the storage region information of the value data of the key-value data to be cached and the key data of the data to be cached from the data storage request, and then determines the first target storage region corresponding to the value data of the key-value data to be cached according to the storage length information in the storage region information, so that the first target storage region may be subsequently used to store the value data of the key-value data to be cached.

In this embodiment of the present disclosure, upon determining the first target storage region corresponding to the value data of the key-value data to be cached, the key-value database server sends, to the key-value database client via the second network interface card, the data read request carrying the storage address information, to request the key-value database client to read, from the graphics memory of the graphics processing unit, the value data of the key-value data to be cached based on the storage address information.

The key-value database client 102 is further configured to: control, upon receiving the data read request that is sent by the key-value database server via the second network interface card, the first network interface card to read, from the graphics memory of the graphics processing unit, the value data of the key-value data to be cached according to the storage address information, the data read request carrying the storage address information, and send the value data of the key-value data to be cached to the key-value database server.

The first network interface card communicates with the second network interface card via the remote direct memory access protocol.

The Remote Direct Memory Access (RDMA) protocol is an efficient network communication technology that allows a device or service in a network to directly access the memory of another device or service without the intervention of an operating system, thereby reducing latency and improving the speed and efficiency of data transmission. Since the first network interface card and the second network interface card in this embodiment of the present disclosure communicate via the remote direct memory access protocol, the key-value data to be cached may be directly sent from the GPU memory to the key-value database server without data copying in the memory of the key-value database client, and the transmission speed of the key-value data to be cached may be improved.

In this embodiment of the present disclosure, upon receiving the data read request that is sent by the key-value database server via the second network interface card, the data read request carrying the storage address information, the key-value database client does not need to copy the key-value data to be cached to the memory of the key-value database client and then send the key-value data to be cached, but directly sends the value data of the key-value data to be cached to the key-value database server via the first network interface card upon reading the value data of the key-value data to be cached, to store the key-value data to be cached by the key-value database server, thereby improving the storage efficiency of the key-value data.

The key-value database server 103 is further configured to: write, upon the value data of the key-value data to be cached is received, via the second network interface card, the value data of the key-value data to be cached into the first target storage region.

In this embodiment of the present disclosure, upon receiving the value data of the key-value data to be cached sent by the key-value database client, the key-value database server writes the value data of the key-value data to be cached into the first target storage region via the second network interface card. Since the second network interface card communicates via the remote memory direct access protocol, no data copying is required, and the key-value data to be cached may be efficiently stored.

Fig. 2 is a flowchart of storage in a key-value database system according to an embodiment of the present disclosure. The key-value database system includes a key-value database client and a key-value database server, where the key-value database client may be deployed on a host machine, and the key-value database server may be deployed on a server.

The host machine may include the key-value database client, a memory, a first network interface card, and a graphics processing unit integrated on a mainboard of the host machine or a graphics processing unit installed on the host machine via a slot. The server may include the key-value database server, a memory, a second network interface card, and the like.

Upon determining that there is key-value data to be cached in a GPU memory, the key-value database client sends, to the key-value database server, a data storage request for the key-value data to be cached, where the data storage request carries storage region information of value data of the key-value data to be cached and key data of the key-value data to be cached, the storage region information including storage address information and storage length information of the value data of the key-value data to be cached in the GPU memory.

Upon receiving the data storage request, the key-value database server determines a first target storage region corresponding to the value data of the key-value data to be cached according to the storage length information carried in the data storage request, and sends, to the key-value database client via the second network interface card, a data read request carrying the storage address information.

① Upon receiving the data read request, carrying the storage address information, that is sent by the key-value database server, the key-value database client controls the first network interface card to read, from the graphics memory of the graphics processing unit, the value data of the key-value data to be cached according to the storage address information; and ② then sends the key-value data to be cached to the key-value database server via the network.

The first network interface card and the second network interface card both communicate via the remote direct memory access protocol.

③ Upon receiving the value data of the key-value data to be cached sent by the key-value database client, the key-value database server writes the value data of the key-value data to be cached into the first target storage region via the second network interface card.

In the database system provided in this embodiment of the present disclosure, the key-value database client is configured to: upon determining that there is key-value data to be cached in the graphics memory of the graphics processing unit, send, to the key-value database server, a data storage request for the key-value data to be cached, where the data storage request carries the storage address information and the storage length information of the value data of the key-value data to be cached; the key-value database server is configured to: determine, upon the data storage request is received, the first target storage region corresponding to the value data of the key-value data to be cached according to the storage length information, and send a data read request that carries the storage address information to the key-value database client; the key-value database client is further configured to: control, upon receiving the data read request that is sent by the key-value database server, the first network interface card to read, from the graphics memory of the graphics processing unit, the value data of the key-value data to be cached according to the storage address information, the data read request carrying the storage address information, and send the value data to the key-value database server; and the key-value database server is further configured to: upon the value data is received, write the value data into the first target storage region.

In this embodiment of the present disclosure, the key data and the value data in the key-value data to be cached in the graphics memory of the GPU are independently transmitted to the key-value database server respectively, and the first network interface card supporting the remote direct memory access protocol is controlled to directly write the value data with a relatively large data volume from the GPU memory into the first target storage region of the key-value database server, so that the key-value data to be cached is stored by the key-value database server. It may be seen that in the data processing method based on a key-value database provided by this embodiment of the present disclosure, the key-value data in the GPU memory may be stored without a process such as memory copying, and the processing efficiency of the key-value data is improved.

To facilitate understanding of the foregoing embodiments, an embodiment of the present disclosure further provides a data processing method based on a key-value database. The data processing method based on a key-value database is applied to a key-value database client, for example, a key-value database client deployed on a host server. The method is described below with reference to specific embodiments.

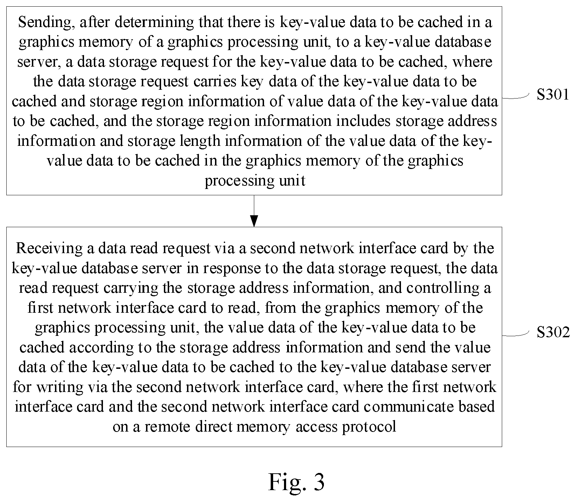

Fig. 3 is a schematic flowchart of a data processing method based on a key-value database according to an embodiment of the present disclosure. The method may be performed by a data processing apparatus based on a key-value database. The apparatus may be implemented in software and/or hardware, and may generally be integrated in an electronic device. As shown in Fig. 3, the method includes:

S301: sending, upon determining that there is key-value data to be cached in a graphics memory of a graphics processing unit, a data storage request for the key-value data to be cached to a key-value database server.

The data storage request carries key data of the key-value data to be cached and storage region information of value data of the key-value data to be cached, the storage region information including storage address information and storage length information of the value data of the key-value data to be cached in the graphics memory of the graphics processing unit.

In this embodiment of the present disclosure, upon determining that there is the key-value data to be cached in the graphics memory of the graphics processing unit, the data storage request for the key-value data to be cached is first sent to the key-value database server, to request the key-value database server to write the key-value data to be cached into a storage region of the key-value database server, thereby reducing the occupancy of the graphics memory of the graphics processing unit by the key-value data to be cached.

In an optional implementation, by carrying the key data of the key-value data to be cached in the data storage request, the security and correct access permission during the remote access and data storage process may be improved. In addition, the data storage request also carries the storage length information of the value data of the key-value data to be cached in the graphics memory of the graphics processing unit, so that the key-value database server may determine, based on the storage length information, the first target storage region of the key-value data to be cached in the key-value database server for subsequent use in storing the value data of the key-value data to be cached.

In another optional implementation, the data storage request may further carry a remote access key of the graphics memory of the graphics processing unit, where the remote access key is a mechanism used to control the access permission for a remote memory region, which may ensure that only an authorized server may access a specified memory region. By carrying the remote access key in the data storage request, the security and effectiveness of data transmission may be improved.

S302: receiving a data read request that is returned via a second network interface card by the key-value database server in response to the data storage request , the data read request carrying the storage address information, and controlling a first network interface card to read, from the graphics memory of the graphics processing unit, the value data of the key-value data to be cached according to the storage address information and send the value data of the key-value data to be cached to the key-value database server for writing via the second network interface card.

The first network interface card and the second network interface card both communicate via a remote direct memory access protocol, and the key-value database server is configured to write the received value data of the key-value data to be cached via the second network interface card.

Since the first network interface card in this embodiment of the present disclosure supports the remote direct memory access protocol, upon receiving the data read request that is sent by the key-value database server, he data read request carrying the storage address information, there is no need to copy the key-value data to be cached to the system memory and then send the key-value data to be cached, but the first network interface card is controlled to read the value data of the key-value data to be cached from the graphics memory of the graphics processing unit according to the storage address information, and then the value data of the key-value data to be cached is directly sent to the key-value database server, to store the key-value data to be cached by the key-value database server, thereby improving the storage efficiency of the key-value data.

In practical applications, when the key-value data in the GPU memory is stored by using the distributed KV storage space, it is usually necessary to first copy the data from the GPU memory of a first server to the system memory, and then transmit the data to another server via the network, and the other server needs to perform one more data copying operation. Apparently, this distributed KV storage method requires data copying for multiple times, resulting in high communication latency.

Therefore, in this embodiment of the present disclosure, before the first network interface card is controlled to read, from the graphics processing unit, the value data of the key-value data to be cached according to the storage address information, part or all of the storage region in the graphics memory of the graphics processing unit may be registered in the first network interface card, so that the first network interface card has the right to access the part or all of the storage region.

Since part or all of the storage region in the GPU memory is registered in the first network interface card in advance, upon the data read request returned by the key-value database server via the second network interface card is received, the first network interface card may be controlled to directly access part or all of the storage region in the GPU memory to read the value data of the key-value data to be cached. Since the data transmission path bypasses the host memory and the Central Processing Unit (CPU), the data transmission efficiency may be improved and the communication latency may be reduced.

In an optional implementation, upon determining that there is the key-value data to be cached in the graphics memory of the graphics processing unit, the data storage request may be sent to the key-value database server the first network interface card by using the message sending operation in the remote direct memory access protocol, so that the second network interface card receives the data storage request by using the message receiving operation in the remote direct memory access protocol.

Since the Remote Direct Memory Access (RDMA) technology allows data to be directly transmitted between network interface cards without copying the data to the system memory, in this embodiment of the present disclosure, the data storage request is sent to the key-value database server via the first network interface card by using the message sending operation SEND in the RDMA, and the data storage request carries the storage region information of the value data of the key-value data to be cached and the key data of the key-value data to be cached, to request the key-value database server to determine the first target storage region corresponding to the value data of the key-value data to be cached according to the storage length information included in the storage region information.

In addition, the key-value database server may further receive, via the second network interface card, the data storage request sent by the key-value database client by using the message receiving operation RECV in the RDMA, and write the value data of the key-value data to be cached into the first target storage region via the second network interface card.

In an optional implementation, during the communication using the RDMA protocol, the key-value database client and the key-value database server may further negotiate via a specified communication mechanism (for example, the Transmission Control Protocol and the Internet Protocol) to determine the maximum length of the key data and the maximum length of a command word of the key-value data to be stored. The length of the command word refers to the length of control information used for an RDMA operation, and the RDMA operation may include, for example, the message sending operation SEND, the message receiving operation RECV, and the like.

In this embodiment of the present disclosure, upon the maximum length of the key data and the maximum length of the command word of the key-value data to be stored are determined, when the data storage request is sent to the key-value database server via the first network interface card by using the message sending operation SEND in the RDMA, the length of the data storage request is the sum of the length of the key data of the key-value data to be stored and the length of the command word.

It may be seen that in this embodiment of the present disclosure, the maximum length of the key data and the maximum length of the command word are determined through negotiation between the key-value database client and the key-value database server, thereby ensuring that both the key-value database client and the key-value database server may correctly parse and process the RDMA operation.

According to the data processing method based on a key-value database provided by this embodiment of the present disclosure, upon determining that there is key-value data to be cached in a graphics memory of a graphics processing unit, a data storage request for the key-value data to be cached is sent to a key-value database server, where the data storage request carries storage address information and storage length information of value data of the key-value data to be cached in the graphics memory of the graphics processing unit; and a data read request that is sent by the key-value database server is received, the data read request carrying the storage address information, and a first network interface card is controlled to read, from the graphics memory of the graphics processing unit, the value data of the key-value data to be cached according to the storage address information and send the value data of the key-value data to be cached to the key-value database server for writing, where the first network interface card and a second network interface card both communicate via a remote direct memory access protocol.

In this embodiment of the present disclosure, key data and the value data in the key-value data to be cached in the graphics memory of the GPU are independently transmitted to the key-value database server respectively, and the first network interface card supporting the remote direct memory access protocol is controlled to directly write the value data with a relatively large data volume from the GPU memory into a first target storage region of the key-value database server, so that the key-value data to be cached is stored by the key-value database server via the second network interface card supporting the remote direct memory access protocol. It may be seen that in the data processing method based on a key-value database provided by this embodiment of the present disclosure, the key-value data in the GPU memory may be stored without a process such as memory copying, and the processing efficiency of the key-value data is improved.

In practical applications, in a text generation scenario, upon swapping key-value data out of the GPU memory to a remote key-value database server, a key-value database client needs to take out the key-value data from the remote key-value database server again and load the key-value data into the GPU memory of the key-value database client in a next message chat, to generate a message chat.

Therefore, in this embodiment of the present disclosure, upon determining that there is key-value data to be obtained in the graphics processing unit, a data obtaining request may be sent to the key-value database server, to implement writing value data of the key-value data to be obtained from the remote key-value database server into the key-value database client. Specifically, upon determining that there is the key-value data to be obtained in the graphics processing unit, the data obtaining request is sent to the key-value database server, where the data obtaining request carries key data of the key-value data to be obtained and information about a second target storage region in the graphics memory of the graphics processing unit.

In this embodiment of the present disclosure, the second target storage region may be used to represent a storage location, in the graphics processing unit of the key-value database client, of data to be obtained that is read from the key-value database server. The information about the second target storage region may include start address information and storage length information of the value data of the key-value data to be obtained in the graphics memory of the graphics processing unit.

In this embodiment of the present disclosure, upon receiving the data obtaining request, the key-value database server first parses the data obtaining request to obtain the key data of the key-value data to be obtained, then obtains corresponding value data from key-value pairs stored in a database based on the key data, and sends the value data to the key-value database client. The storage of the key-value pairs in the database may be implemented by using a hash table. Specifically, the key data may be used as an index of the hash table, so that the corresponding value data may be quickly located.

In this embodiment of the present disclosure, upon the value data of the key-value data to be obtained that is returned by the key-value database server is received, the first network interface card is controlled to write the value data of the key-value data to be obtained into the second target storage region, thereby completing the reading process of the key-value data to be obtained.

In an optional implementation, in order to reduce the communication latency in the transmission process, the key-value data in the GPU memory may also be read into a memory block of the remote key-value database server via a read operation in the Remote Direct Memory Access protocol RDMA. In this embodiment of the present disclosure, a data read request sent by the key-value database server by using the read operation in the Remote Direct Memory Access protocol is received.

It may be seen that since the read operation in the remote direct memory access protocol allows the key-value database client to directly read the value data of the key-value data to be cached from the graphics memory of the graphics processing unit and send the value data of the key-value data to be cached to the key-value database server via the network, and the data reading process does not require the participation of the CPU, the latency may be reduced and the data transmission efficiency may be improved.

In addition, in this embodiment of the present disclosure, the key data of the key-value data to be obtained is transmitted by using the message sending operation SEND and the message receiving operation RECV in the Remote Direct Memory Access protocol RDMA, and the value data of the key-value data to be obtained is transmitted by using the read operation READ and the write operation WRITE in the Remote Direct Memory Access protocol RDMA, so that the key data and the value data in the key-value data to be cached in the GPU memory are independently transmitted to the key-value database server respectively, and the value data with a relatively large data volume is directly written from the GPU memory into the first target storage region of the key-value database server via the first network interface card, the key-value data in the GPU memory may be stored without a process such as memory copying, and the processing efficiency of the key-value data is improved.

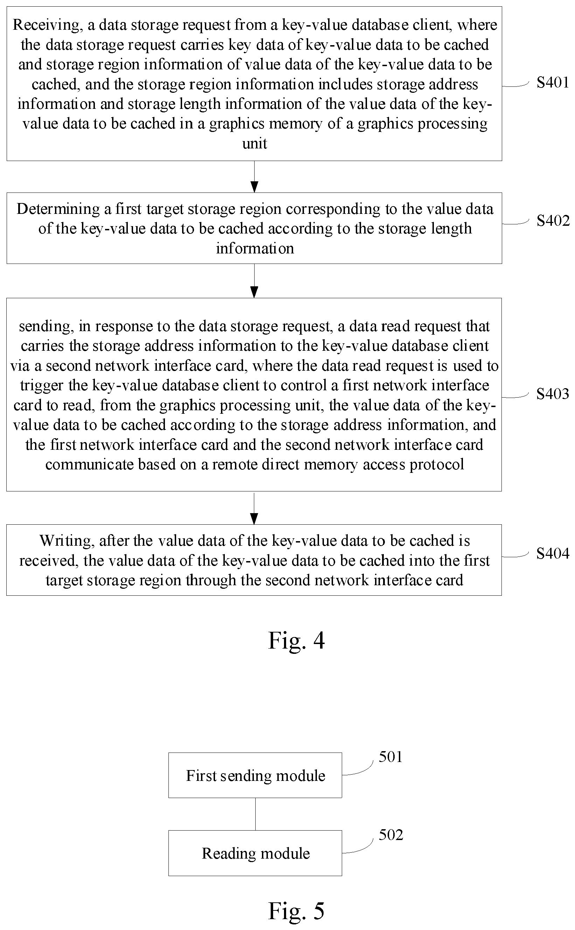

Correspondingly, an embodiment of the present disclosure further provides a data processing method based on a key-value database. The method is applied to a key-value database server. Fig. 4 is a schematic flowchart of another data processing method based on a key-value database according to an embodiment of the present disclosure. The method may be performed by a data processing apparatus based on a key-value database. The apparatus may be implemented in software and/or hardware, and may generally be integrated in an electronic device. As shown in Fig. 4, the method includes:

S401: receiving a data storage request from a key-value database client.

The data storage request carries key data of key-value data to be cached and storage region information of value data of the key-value data to be cached, the storage region information including storage address information and storage length information of the value data of the key-value data to be cached in a graphics memory of a graphics processing unit.

In this embodiment of the present disclosure, upon the data storage request from the key-value database client is received, the data storage request is first parsed to obtain the storage region information of the value data of the key-value data to be cached and the key data of the key-value data to be cached that are carried in the data storage request.

Since the data storage request carries the storage length information of the value data of the key-value data to be cached in the GPU memory corresponding to the key-value database client, upon receiving the data storage request from the key-value database client, the key-value database server may determine, based on the storage length information, a first target storage region of the key-value data to be cached in the key-value database server.

In addition, the data storage request also carries the key data of the key-value data to be cached. Since the key data may be used to uniquely identify the key-value data to be cached, the security and correct access permission during the remote access and data storage process may be improved.

S402: determining a first target storage region corresponding to the value data of the key-value data to be cached according to the storage length information.

In this implementation of the present disclosure, upon the data storage request from the key-value database client is received, the first target storage region corresponding to the value data of the key-value data to be cached is first determined according to the storage length information carried in the data storage request, so that the first target storage region may be subsequently used to store the value data of the key-value data to be cached.

In practical applications, a buddy system may be used to manage the virtual memory space of the key-value database server. Specifically, the virtual memory space of a preset memory size may be divided, according to a preset byte size, into a preset integer number of memory blocks, and the memory size for storing the value data of the key-value data is the preset byte size × the preset integer number. When applying to the buddy system for allocating or releasing memory of a target byte size, the key-value database server needs to align the target byte size with the preset byte size. Exemplarily, the virtual memory space may be divided into 1024 memory blocks with a size of 4096 bytes. Assuming that the requested target byte size is 8000 bytes, the aligned memory size is 8192 bytes, that is, two consecutive memory blocks with a size of 4096 bytes are required.

In practical applications, upon receiving the value data of the key-value data to be cached, the remote server needs to perform one more data copying operation to store the value data of the key-value data to be cached into the remote server. Apparently, this distributed KV storage method requires data copying for multiple times, and the processing efficiency of the key-value data is low.

Therefore, in order to further improve the processing efficiency of the key-value data, in this embodiment of the present disclosure, upon the value data of the key-value data to be cached is received, the value data of the key-value data to be cached may be written into the first target storage region via the second network interface card. The second network interface card is a network interface card supporting the remote direct memory access protocol.

Since the second network interface card in this embodiment of the present disclosure supports the remote direct memory access protocol, upon the value data of the key-value data to be cached is received, there is no need to copy the value data of the key-value data to be cached, but the value data of the key-value data to be cached is directly written into the first target storage region to complete the storage of the value data of the key-value data to be cached, thereby improving the storage efficiency of the key-value data.

In an optional implementation, in order to enable the second network interface card to directly access part or all of the virtual memory space, it is also possible to obtain a virtual memory space of a preset memory size and register the virtual memory space in the second network interface card.

The virtual memory space of the preset memory size is a size of a preset integer number of memory blocks. Exemplarily, assuming that the size of each memory block is 128 bytes, the memory size of the virtual memory space is an integral multiple of 128 bytes, for example, 256 bytes, 512 bytes, etc.

In an optional implementation, the determining a first target storage region corresponding to the value data of the key-value data to be cached according to the storage length information may include: determining a target number of memory blocks from the virtual memory space according to the storage length information, where a memory size corresponding to the target number of memory blocks is not less than a memory size corresponding to the storage length information.

Exemplarily, it is assumed that a virtual memory space of 4096 bytes is registered in the second network interface card in advance, and the virtual memory space of 4096 bytes includes 32 memory blocks with a memory size of 128 bytes. Assuming that the memory size corresponding to the storage length information is 500 bytes, it may be determined, according to the storage length information, that four memory blocks need to be determined from the virtual memory space, and the four memory blocks of 128 bytes are determined as the first target storage region corresponding to the value data of the key-value data to be cached.

In practical applications, when a memory space of 500 bytes is generated for the buddy system, if the size of the virtual memory space is 384 bytes, it indicates that there is no memory space of an appropriate size at this time, and a message indicating that the data storage fails is returned to the key-value database client.

S403: sending a data read request that carries the storage address information to the key-value database client.

The data read request is used to trigger the key-value database client to control a first network interface card to read, from the graphics processing unit, the value data of the key-value data to be cached according to the storage address information, the first network interface card supporting the remote direct memory access protocol.

In this embodiment of the present disclosure, upon the first target storage region corresponding to the value data of the key-value data to be cached is determined according to the storage length information carried in the data storage request, the data read request carrying the storage address information is sent to the key-value database client, to request the key-value database client to control the first network interface card to read, from the graphics memory of the graphics processing unit, the value data of the key-value data to be cached according to the storage address information.

Since the first network interface card in this embodiment of the present disclosure supports the remote direct memory access protocol, upon receiving the data read request that is sent by the key-value database server, the data read request carrying the storage address information, the key-value database client does not need to copy the key-value data to be cached into the system memory before sending, but upon controlling the first network interface card to read the value data of the key-value data to be cached from the graphics memory of the graphics processing unit according to the storage address information, the key-value database client directly sends the value data of the key-value data to be cached to the key-value database server, so that the key-value data to be cached is stored by the key-value database server, thereby improving the storage efficiency of the key-value data.

S404: writing, upon the value data of the key-value data to be cached is received, the value data of the key-value data to be cached into the first target storage region.

In this embodiment of the present disclosure, upon the value data of the key-value data to be cached that is sent by the key-value database client is received, the value data of the key-value data to be cached is written into the first target storage region, to implement efficient storage of the key-value data to be cached.

In an optional implementation, it is also possible to receive a data obtaining request from the key-value database client, where the data obtaining request carries key data of key-value data to be obtained and information about a second target storage region in the graphics memory of the graphics processing unit; and then, obtain value data of the key-value data to be obtained according to the key data of the key-value data to be obtained, and control a first network interface card to write the value data of the key-value data to be obtained into the second target storage region of the key-value database client.

In this embodiment of the present disclosure, the key data of the key-value data to be obtained is first parsed from the data obtaining request, and then whether the key data of the key-value data to be obtained exists in the database is determined. If the key data exists, the corresponding value data of the key-value data to be obtained is obtained, and the value data of the key-value data to be obtained is sent to the key-value database client, so that the key-value database client controls the first network interface card to write the value data of the key-value data to be obtained into the second target storage region, thereby completing the process of reading the key-value data from the key-value database server.

In an optional implementation, if it is determined that the key data of the key-value data to be obtained exists in the database, the value data corresponding to the key data is obtained, and whether a memory size of the second target storage region is greater than or equal to a memory size of the value data of the key-value data to be obtained is determined. If it is determined that the memory size of the second target storage region is greater than or equal to the memory size of the value data of the key-value data to be obtained, it indicates that the second target storage region is sufficient to store the value data of the key-value data to be obtained. At this time, the value data of the key-value data to be obtained is written into the second target storage region by using the write operation in the remote direct memory access protocol.

If it is determined that the memory size of the second target storage region is less than the memory size of the value data of the key-value data to be obtained, it indicates that the second target storage region is insufficient to store the value data of the key-value data to be obtained, and a message indicating that the obtaining fails is returned, to prompt the key-value database client that the obtaining of the value data of the key-value data to be obtained fails.

In the data processing method based on a key-value database provided by this embodiment of the present disclosure, upon determining that there is key-value data to be cached in a graphics memory of a graphics processing unit, a data storage request for the key-value data to be cached is sent to a key-value database server, where the data storage request carries storage address information and storage length information of value data of the key-value data to be cached in the graphics memory of the graphics processing unit; and a data read request that is sent by the key-value database server is received, data read request carrying the storage address information and a first network interface card supporting a remote direct memory access protocol is controlled to read, from the graphics memory of the graphics processing unit, the value data of the key-value data to be cached according to the storage address information and send the value data of the key-value data to be cached to the key-value database server, so that the value data of the key-value data to be cached is written into a first target storage region by the key-value database server.

In this embodiment of the present disclosure, key data and the value data in the key-value data to be cached in a GPU memory are independently transmitted to the key-value database server respectively, and the first network interface card supporting the remote direct memory access protocol is controlled to directly write the value data with a relatively large data volume from the GPU memory into the first target storage region of the key-value database server, so that the key-value data to be cached is stored by the key-value database server. It may be seen that in the data processing method based on a key-value database provided by this embodiment of the present disclosure, the key-value data in the GPU memory may be stored without a process such as memory copying, and the processing efficiency of the key-value data is improved.

In order to implement the foregoing embodiments, the present disclosure further provides a data processing apparatus based on a key-value database. Fig. 5 is a schematic diagram of a structure of a data processing apparatus based on a key-value database according to an embodiment of the present disclosure. The apparatus may be implemented in software and/or hardware, and may generally be integrated in an electronic device. As shown in Fig. 5, the apparatus includes:
a first sending module 501 configured to: send, upon determining that there is key-value data to be cached in a graphics memory of a graphics processing unit, a data storage request for the key-value data to be cached to a key-value database server, where the data storage request carries key data of the key-value data to be cached and storage region information of value data of the key-value data to be cached, the storage region information including storage address information and storage length information of the value data of the key-value data to be cached in the graphics memory of the graphics processing unit; and
a reading module 502, configured to receive a data read request that is returned via a second network interface card by the key-value database server in response to the data storage request , the data read request carrying the storage address information, and control a first network interface card to read, from the graphics memory of the graphics processing unit, the value data of the key-value data to be cached according to the storage address information and send the value data of the key-value data to be cached to the key-value database server for writing via the second network interface card, where the first network interface card and the second network interface card communicate via a Remote Direct Memory Access protocol.

In an optional implementation, the apparatus further includes:
a second sending module, configured to send, upon determining that there is key-value data to be obtained in the graphics processing unit, a data obtaining request to the key-value database server, where the data obtaining request carries key data of the key-value data to be obtained and information about a second target storage region in the graphics memory of the graphics processing unit, the data obtaining request being used to request the key-value database server to obtain value data of the key-value data to be obtained according to the key data; and
a first writing module, configured to receive the value data of the key-value data to be obtained that is returned by the key-value database server, and control the first network interface card to write the value data of the key-value data to be obtained into the second target storage region.

In an optional implementation, the apparatus further includes:
a first registration module, configured to register, in the first network interface card, part or all of a storage region in the graphics memory of the graphics processing unit, so that the first network interface card has the right to access the part or all of the storage region.

In an optional implementation, the first sending module includes:
a sending sub-module, configured to send, upon determining that there is key-value data to be cached in the graphics memory of the graphics processing unit, to the key-value database server via the first network interface card, the data storage request by using a message sending operation in the remote direct memory access protocol, so that the second network interface card receives the data storage request by using a message receiving operation in the remote direct memory access protocol.

In an optional implementation, the first writing module includes:
a receiving sub-module, configured to receive the data read request sent by the key-value database server via the second network interface card by using a read operation in the remote direct memory access protocol, so that the second network interface card writes the read value data of the key-value data to be cached by using a write operation in the remote direct memory access protocol.

In the data processing apparatus based on a key-value database provided by this embodiment of the present disclosure, upon determining that there is key-value data to be cached in a graphics memory of a graphics processing unit, a data storage request for the key-value data to be cached is sent to a key-value database server, where the data storage request carries storage address information and storage length information of value data of the key-value data to be cached in the graphics memory of the graphics processing unit; and a data read request that is sent by the key-value database server is received, the data read request carrying the storage address information, and a first network interface card is controlled to read, from the graphics memory of the graphics processing unit, the value data of the key-value data to be cached according to the storage address information and send the value data of the key-value data to be cached to the key-value database server, so that the value data of the key-value data to be cached is written by the key-value database server via a second network interface card, where the first network interface card and the second network interface card communicate via a remote direct memory access protocol.

In this embodiment of the present disclosure, the key data and the value data in the key-value data to be cached in the graphics memory of the GPU are independently transmitted to the key-value database server respectively, and the first network interface card supporting the remote direct memory access protocol is controlled to directly write the value data with a relatively large data volume from the GPU memory into the first target storage region of the key-value database server, so that the key-value data to be cached is written by the key-value database server via the second network interface card supporting the remote direct memory access protocol. It may be seen that in the data processing method based on a key-value database provided by this embodiment of the present disclosure, the key-value data in the GPU memory may be stored without a process such as memory copying, and the processing efficiency of the key-value data is improved.

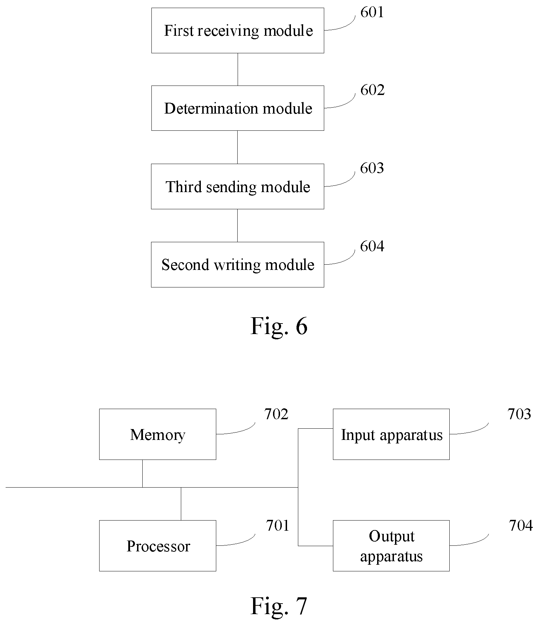

Correspondingly, an embodiment of the present disclosure further provides another data processing apparatus based on a key-value database. Fig. 6 is a schematic diagram of a structure of another data processing apparatus based on a key-value database according to an embodiment of the present disclosure. The apparatus may be implemented in software and/or hardware, and may generally be integrated in an electronic device. As shown in Fig. 6, the apparatus includes:
a first receiving module 601, configured to receive a data storage request from a key-value database client, where the data storage request carries key data of key-value data to be cached and storage region information of value data of the key-value data to be cached, the storage region information including storage address information and storage length information of the value data of the key-value data to be cached in a graphics memory of a graphics processing unit;
a determination module 602, configured to determine a first target storage region corresponding to the value data of the key-value data to be cached according to the storage length information;
a third sending module 603, configured to send, to the key-value database client via a second network interface card, a data read request that carries the storage address information and the data read request is for the data storage request, where the data read request is used to trigger the key-value database client to control a first network interface card to read, from the graphics processing unit, value data of the key-value data to be cached according to the storage address information, the first network interface card and the second network interface card communicating via a remote direct memory access protocol; and
a second writing module 604, configured to write upon the value data of the key-value data to be cached is received, the value data of the key-value data to be cached into the first target storage region via the second network interface card.

In an optional implementation, the second writing module includes:
a writing sub-module, configured to write, upon the value data of the key-value data to be cached is received, into the first target storage region via the second network interface card, the value data of the key-value data to be cached, where the second network interface card supports the remote direct memory access protocol.

In an optional implementation, the apparatus further includes:
a registration module, configured to obtain a virtual memory space of a preset memory size, and register the virtual memory space in the second network interface card, where the virtual memory space of the preset memory size is a size of a preset integer number of memory blocks.

In an optional implementation, the determination module includes:
a first determination sub-module, configured to determine a target number of memory blocks from the virtual memory space according to the storage length information, where a memory size corresponding to the target number of memory blocks is not less than a memory size corresponding to the storage length information; and
a second determination sub-module, configured to determine the target number of memory blocks as the first target storage region corresponding to the value data of the key-value data to be cached.

In an optional implementation, the apparatus further includes:
a second receiving module, configured to receive a data obtaining request from the key-value database client, where the data obtaining request carries key data of key-value data to be obtained and information about a second target storage region in the graphics memory of the graphics processing unit; and
a third writing module, configured to obtain value data of the key-value data to be obtained according to the key data of the key-value data to be obtained, and control a second network interface card to write the value data of the key-value data to be obtained into the second target storage region of the key-value database client, where the second network interface card supports the remote direct memory access protocol.

It may be seen that in the data processing method based on a key-value database provided by this embodiment of the present disclosure, the key-value data in the GPU memory may be stored without a process such as memory copying, and the processing efficiency of the key-value data is improved.

The data processing apparatus based on a key-value database provided by this embodiment of the present disclosure may perform the data processing method based on a key-value database provided by any embodiment of the present disclosure, and has corresponding functional modules and beneficial effects for performing the method.

In addition to the foregoing methods and apparatuses, an embodiment of the present disclosure further provides a computer-readable storage medium. The computer-readable storage medium stores an instruction. When the instruction is run on a terminal device, the terminal device is enabled to implement the data processing method based on a key-value database according to the embodiment of the present disclosure.

An embodiment of the present disclosure further provides a computer program product. The computer program product includes a computer program/instruction. When the computer program/instruction is executed by a processor, the data processing method based on a key-value database according to the embodiment of the present disclosure is implemented.

In addition, an embodiment of the present disclosure further provides a data processing device based on a key-value database. As shown in Fig. 7, the data processing device may include:
a processor 701, a memory 702, an input apparatus 703, and an output apparatus 704. The number of processors 701 in the data processing device based on a key-value database may be one or more. In Fig. 7, one processor is used as an example. In some embodiments of the present disclosure, the processor 701, the memory 702, the input apparatus 703, and the output apparatus 704 may be connected via a bus or in another manner. In Fig. 7, connection via a bus is used as an example.

The memory 702 may be used to store software programs and modules. The processor 701 executes various functional applications and data processing of the data processing device based on a key-value database by running the software programs and modules stored in the memory 702. The memory 702 may mainly include a program storage region and a data storage region. The program storage region may store an operating system, an application program required for at least one function, and the like. In addition, the memory 702 may include a high-speed random access memory or a non-volatile memory, for example, at least one magnetic disk storage device, a flash memory device, or another volatile solid-state storage device. The input apparatus 703 may be used to receive input digital or character information, and generate a signal input related to user settings and function control of the data processing device based on a key-value database.

Specifically, in this embodiment, the processor 701 may load, into the memory 702 according to the following instructions, an executable file corresponding to a process of one or more application programs, and the processor 701 runs the application programs stored in the memory 702, thereby implementing the various functions of the data processing device based on a key-value database.

It should be noted that in this specification, relational terms such as "first" and "second" are used only to distinguish one entity or operation from another entity or operation, and do not necessarily require or imply any actual relationship or order between these entities or operations. Moreover, the terms "include/comprise", "have", or any other variant thereof are intended to cover non-exclusive inclusion, so that a process, method, object, or device that includes a list of elements includes not only those elements, but also other elements not explicitly listed or elements inherent to such process, method, object, or device. Without further restrictions, an element defined by the phrase "includes a" does not exclude that there are other identical elements in the process, method, object, or device that includes the element.

The foregoing descriptions are merely specific implementations of the present disclosure, so that those skilled in the art may understand or implement the present disclosure. Various modifications to these embodiments will be apparent to those skilled in the art, and the generic principles defined herein may be implemented in other embodiments without departing from the spirit or scope of the present disclosure. Therefore, the present disclosure will not be limited to the embodiments described herein, but rather to the widest scope consistent with the principles and novel features disclosed herein.

## Claims

1. A data processing method based on a key-value database, comprising:
sending (301), upon determining that there is first key-value data in a graphics memory of a graphics processing unit, a data storage request for the first key-value data to a key-value database server, wherein the data storage request carries key data of the first key-value data and storage region information of value data of the first key-value data, and the storage region information comprises storage address information and storage length information of the value data of the first key-value data in the graphics memory of the graphics processing unit; and
receiving (302) a data read request that is returned via a second network interface card by the key-value database server in response to the data storage request, the data read request carrying the storage address information, and controlling a first network interface card to read, from the graphics memory of the graphics processing unit, the value data of the first key-value data according to the storage address information and send the value data of the first key-value data to the key-value database server for writing via the second network interface card, wherein the first network interface card and the second network interface card communicate based on a remote direct memory access protocol.

2. The method of claim 1, further comprising:
sending, upon determining that there is second key-value data in the graphics processing unit, a data obtaining request to the key-value database server, wherein the data obtaining request carries key data of the second key-value data and information about a second storage region in the graphics memory of the graphics processing unit, and the data obtaining request is used to request the key-value database server to obtain value data of the second key-value data according to the key data; and
receiving the value data of the second key-value data returned by the key-value database server, and controlling the first network interface card to write the value data of the second key-value data into the second storage region.

3. The method of claim 1, wherein before the controlling the first network interface card to read, from the graphics memory of the graphics processing unit, the value data of the first key-value data according to the storage address information, the method further comprises:
registering, in the first network interface card, part or all of a storage region in the graphics memory of the graphics processing unit, so that the first network interface card is authorized to access the part or all of the storage region.

4. The method of claim 1, wherein the sending, upon determining that there is the first key-value data in the graphics memory of the graphics processing unit, the data storage request for the first key-value data to a key-value database server comprises:
sending, upon determining that there is the first key-value data in the graphics memory of the graphics processing unit, to the key-value database server via the first network interface card, the data storage request by using a message sending operation in the remote direct memory access protocol, so that the second network interface card receives the data storage request by using a message receiving operation in the remote direct memory access protocol.

5. The method of claim 1, wherein the receiving the data read request that is returned via the second network interface card by the key-value database server in response to the data storage request, the data read request carrying the storage address information comprises:
receiving the data read request sent by the key-value database server via the second network interface card by using a read operation in the remote direct memory access protocol, so that the second network interface card writes the read value data of the first key-value data by using a write operation in the remote direct memory access protocol.

6. A data processing method based on a key-value database, comprising:
receiving (401) a data storage request from a key-value database client, wherein the data storage request carries key data of first key-value data and storage region information of value data of the first key-value data, and the storage region information comprises storage address information and storage length information of the value data of the first key-value data in a graphics memory of a graphics processing unit;
determining (402) a first storage region corresponding to the value data of the first key-value data according to the storage length information;
sending (403), in response to the data storage request, a data read request that carries the storage address information to the key-value database client via a second network interface card, wherein the data read request is used to trigger the key-value database client to control a first network interface card to read, from the graphics processing unit, the value data of the first key-value data according to the storage address information, and the first network interface card and the second network interface card communicate based on a remote direct memory access protocol; and
writing (404), upon receiving the value data of the first key-value data, the value data of the first key-value data into the first storage region via the second network interface card.

7. The method of claim 6, further comprising:
obtaining a virtual memory space of a first memory size, and registering the virtual memory space in the second network interface card, wherein the virtual memory space of the first memory size is a size of an integer number of memory blocks.

8. The method of claim 7, wherein the determining the first storage region corresponding to the value data of the first key-value data according to the storage length information comprises:
determining a number of memory blocks from the virtual memory space according to the storage length information, wherein a memory size corresponding to the number of memory blocks is not less than a memory size corresponding to the storage length information; and
determining the number of memory blocks as the first storage region corresponding to the value data of the first key-value data.

9. The method of claim 6, further comprising:
receiving a data obtaining request from the key-value database client, wherein the data obtaining request carries key data of second key-value data and information about a second storage region in the graphics memory of the graphics processing unit; and
obtaining value data of the second key-value data according to the key data of the second key-value data, and controlling the second network interface card to write the value data of the second key-value data into the second storage region of the key-value database client.

10. A key-value database system, comprising a key-value database client and a key-value database server,
wherein
the key-value database client is configured to: send, upon determining that there is first key-value data in a graphics memory of a graphics processing unit, a data storage request for the first key-value data to a key-value database server, wherein the data storage request carries key data of the first key-value data and storage region information of value data of the first key-value data, and the storage region information comprises storage address information and storage length information of the value data of the first key-value data in the graphics memory of the graphics processing unit;
the key-value database server is configured to: determine, upon receiving the data storage request, a first storage region corresponding to the value data of the first key-value data according to the storage length information, and send, to the key-value database client via a second network interface card, a data read request that carries the storage address information;
the key-value database client is further configured to: control, upon receiving the data read request that is sent by the key-value database server via the second network interface card, a first network interface card to read, from the graphics memory of the graphics processing unit, the value data of the first key-value data according to the storage address information, the data read request carrying the storage address information, and send the value data of the first key-value data to the key-value database server, wherein the first network interface card and the second network interface card communicate via a remote direct memory access protocol; and
the key-value database server is further configured to: write, upon receiving the value data of the first key-value data, the value data of the first key-value data into the first storage region via the second network interface card.

11. A data processing apparatus based on a key-value database, comprising:
a first sending module (501), configured to send, upon determining that there is first key-value data in a graphics memory of a graphics processing unit, a data storage request for the first key-value data to a key-value database server, wherein the data storage request carries key data of the first key-value data and storage region information of value data of the first key-value data, and the storage region information comprises storage address information and storage length information of the value data of the first key-value data in the graphics memory of the graphics processing unit; and
a reading module (502), configured to receive a data read request that is returned via a second network interface card by the key-value database server in response to the data storage request, the data read request carrying the storage address information, and control a first network interface card to read, from the graphics memory of the graphics processing unit, the value data of the first key-value data according to the storage address information and send the value data of the first key-value data to the key-value database server for writing via the second network interface card, wherein the first network interface card and the second network interface card communicate based on a remote direct memory access protocol.

12. A data processing apparatus based on a key-value database, comprising:
a first receiving module (601), configured to receive a data storage request from a key-value database client, wherein the data storage request carries key data of first key-value data and storage region information of value data of the first key-value data, and the storage region information comprises storage address information and storage length information of the value data of the first key-value data in a graphics memory of a graphics processing unit;
a determination module (602), configured to determine a first storage region corresponding to the value data of the first key-value data according to the storage length information;
a third sending module (603), configured to send, in response to the data storage request, a data read request that carries the storage address information to the key-value database client via a second network interface card, wherein the data read request is used to trigger the key-value database client to control a first network interface card to read, from the graphics processing unit, the value data of the first key-value data according to the storage address information, and the first network interface card and the second network interface card communicate based on a remote direct memory access protocol; and
a second writing module (604), configured to write, upon receiving the value data of the first key-value data, the value data of the first key-value data into the first storage region via the second network interface card.

13. An electronic device, comprising:
a processor (701); and
a memory (702) configured to store instructions that executed by the processor (701), wherein
the processor (701) is configured to read the instructions from the memory (702), and execute the instructions to implement the data processing method based on a key-value database of any one of claims 1 to 9.

14. A non-transitory computer-readable storage medium, wherein the storage medium stores a computer program, and the computer program is used to cause a processor to perform the data processing method based on a key-value database of any one of claims 1 to 9.

15. A computer program product, wherein the computer program product comprises a computer program/instruction, and when the computer program/instruction is executed by a processor, cause the processor to perform the data processing method based on a key-value database of any one of claims 1 to 9.
